# EUROPEAN PATENT SPECIFICATION

(11) **EP 3 228 390 B1**
(45) Date of publication and mention of the grant of the patent: **23.12.2020**
(21) Application number: 15864886.5
(22) Date of filing: 30.11.2015
(51) Int. Cl.: B05D 7/24, B32B 27/00, C09D 5/16, C09D 7/40, C09D 183/04

(54) **METHOD FOR REINFORCING CONTAMINATION-RESISTANT FILM**
VERFAHREN ZUR VERSTÄRKUNG EINER KONTAMINIERUNGSBESTÄNDIGEN FOLIE
PROCÉDÉ DE RENFORCEMENT D'UN FILM RÉSISTANT À LA CONTAMINATION

(30) Priority: 02.12.2014 JP 2014243820; 03.08.2015 JP 2015153234
(43) Date of publication of application: 11.10.2017
(73) Proprietor: Chugoku Marine Paints, Ltd., Hiroshima 739-0652 (JP)
(72) Inventor: TANINO, Soichiro, Otake-shi Hiroshima 739-0652 (JP); URANO, Yurie, Otake-shi Hiroshima 739-0652 (JP); TANAKA, Hideyuki, Otake-shi Hiroshima 739-0652 (JP)
(74) Representative: Hoffmann Eitle
(86) International application number: PCT/JP2015/083527
(87) International publication number: WO 2016/088694

(56) References cited:
- WO-A1-2011/046087
- WO-A1-2014/077205
- WO-A1-2014/077205
- WO-A1-2014/177159
- JP-A- 2010 254 597
- JP-A- 2014 519 978

## Description

### TECHNICAL FIELD

The present invention relates to a reinforcing method which imparts excellent durability to fouling control coatings.

### BACKGROUND ART

In recent years, studies directed to the prevention of the attachment of aquatic organisms to objects such as marine vessels and underwater structures often focus on fouling control coatings which combine an antifouling agent having bioactivity toward marine organisms with an organopolysiloxane coating having the ability to prevent the attachment and settling of marine organisms.

However, organopolysiloxane coatings are prone to external physical damages due to their material characteristics. Further, the addition of antifouling agents results in a decrease in coating strength and the resultant fouling control coatings become more fragile. As a result, the coatings are easily damaged by external physical factors such as impacts during high-pressure washing of docked marine vessels, and collisions of marine vessels and submarine structures with objects floating in the sea. The consequent damages destroy antifouling properties and cause economic disadvantages such as the need of repair coating application.

Patent Documents 1 and 2 present fouling control coating compositions including a polysiloxane-based binder, a hydrophilic-modified polysiloxane and a biocide. However, Patent Documents 1 and 2 do not address the problem of damages to coatings obtained from the fouling control coating compositions.

Patent Document 3 describes a silicone coating system including an organopolysiloxane and 3-isothiazolones as a biocide. In an aspect, a duplex coating system having a bonding layer and a release layer is described. The bonding layer in the duplex coating system is a reaction product including, on the weight thereof, 10 to 80% organopolysiloxane, 30 to 80% monofunctional monomer, less than 5% free radical initiator, less than 2% polyfunctional monomer, and 0.5 to 25% biocide dispersed therethrough. However, according to the knowledge of the present inventors, the addition of 3-isothiazolones to organopolysiloxane coating compositions sometimes results in, depending on conditions, surface abnormalities and adhesion failures ascribed to the 3-isothiazolones. Thus, it is difficult to apply the disclosed technique to organopolysiloxane fouling control coatings widely and generally.

Patent Document 4 describes a structure coated with a first coating layer containing a biocide, and a subsequent coating layer disposed on the first coating layer and containing less biocide than the first coating layer. The first coating layer and/or the subsequent coating layer includes a polyorganosiloxane.

Patent Document 5 describes a coating system which includes a first coat and a second coat each including a polysiloxane-based binder matrix including hydrophilic oligomer/polymer moieties or a hydrophilic-modified polysiloxane oil.

However, Patent Documents 4 and 5 do not specifically describe methods for preventing coating damages such as separations.

### CITATION LIST

### PATENT LITERATURE

Patent Document 1: JP-A-2013-515122
Patent Document 2: JP-A-2014-524949
Patent Document 3: JP-A-H10-501272
Patent Document 4: JP-A-2004-519978
Patent Document 5: WO 2014/117786

### SUMMARY OF INVENTION

### TECHNICAL PROBLEM

The present invention has been made to solve the problems in the art discussed above. It is therefore an object of the invention to give excellent durability to organopolysiloxane-based fouling control coatings.

### SOLUTION TO PROBLEM

The present invention pertains to the following items [1] to [13].
[1] A method for reinforcing a fouling control coating, comprising:
   a step of forming a reinforcing coating (O) by applying and curing a reinforcing coating composition [o], and
   a step of providing a fouling control coating (X) formed by applying and curing a fouling control coating composition [x], onto the reinforcing coating (O),
   the reinforcing coating composition [o] comprising an organopolysiloxane (AO) having two or more silanol groups or hydrolyzable groups in the molecule, and a pyrithione salt compound (BO) represented by the following general formula [I] : 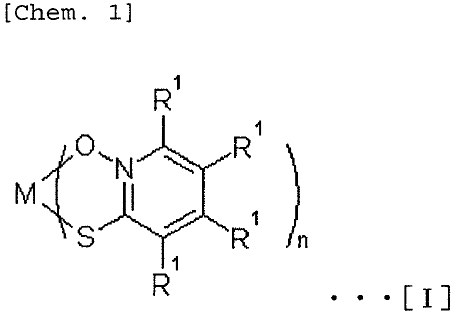
      (in the formula [I], R¹ independently at each occurrence is a hydrogen atom, an alkyl group having 1 to 6 carbon atoms, a cycloalkyl group having 3 to 6 carbon atoms, an alkenyl group having 2 to 6 carbon atoms, an aryl group having 6 carbon atoms, an alkoxy group having 1 to 6 carbon atoms, or a halogenated alkyl group having 1 to 6 carbon atoms,
      M is a metal selected from Cu, Zn, Na, Mg, Ca, Ba, Fe and Sr, and
      n is the valence of the metal M),
      the fouling control coating composition [x] comprising an organopolysiloxane (AX) having two or more silanol groups or hydrolyzable groups in the molecule, and an antifouling agent (BX),
      the content of the pyrithione salt compound (BO) in the reinforcing coating (O) being not more than 10 wt%,
      the reinforcing coating (O) giving reinforcement to the coating (X) adhering thereto,
      wherein the content (wt%) of the pyrithione salt compound (BO) in the reinforcing coating (O) is smaller than the content (wt%) of the antifouling agent (BX) in the fouling control coating (X).
[2] The method for reinforcing a fouling control coating described in [1], wherein the content of the pyrithione salt compound (BO) in the reinforcing coating (O) is not more than 5.5 wt%.
[3] The method for reinforcing a fouling control coating described in [1] or [2], wherein M in the general formula [I] is Cu and/or Zn.
[4] The method for reinforcing a fouling control coating described in any of [1] to [3], wherein the antifouling agent (BX) in the fouling control coating (X) is a pyrithione salt compound represented by the general formula [I] in which M is Cu.
[5] The method for reinforcing a fouling control coating described in any of [1] to [4], wherein the pyrithione salt compound (BO) in the reinforcing coating (O) is a compound represented by the general formula [I] in which M is Zn.
[6] The method for reinforcing a fouling control coating described in any of [1] to [5] wherein the organopolysiloxane (AO) and/or the organopolysiloxane (AX) is represented by the following general formula [II]:

   (W)ᵣR²₍₃₋ᵣ₎Si-O-(SiR²₂-O)ₛ-SiR²₍₃₋ᵣ₎(W)ᵣ ··· [II]

   (in the formula [II], W independently at each occurrence is a hydroxyl group or a hydrolyzable group,
   R² independently at each occurrence is a hydrogen atom, an alkyl group having 1 to 10 carbon atoms, an alkenyl group having 2 to 10 carbon atoms, an aryl group having 6 to 10 carbon atoms, an aralkyl group having 7 to 10 carbon atoms, an alkoxy group having 1 to 10 carbon atoms, or a halogenated alkyl group having 1 to 10 carbon atoms,
   r is an integer of 1 to 3, and
   s is an integer of 10 to 10,000).
[7] The method for reinforcing a fouling control coating described in any of [1] to [6], wherein the reinforcing coating composition [o] further comprises one or more organopolysiloxanes (C) other than the organopolysiloxane (AO), represented by the following general formula [III]:

   R³-(SiR³₂-O)ᵤ-SiR³₃ ··· [III]

   (in the formula [III], u is an integer of 1 to 10,000, and
   R³ independently at each occurrence is an alkyl group having 1 to 30 carbon atoms, an alkenyl group having 2 to 30 carbon atoms, an aryl group having 6 to 30 carbon atoms, an aralkyl group having 7 to 10 carbon atoms, or a halogenated alkyl group having 1 to 30 carbon atoms, and may contain -O-, -S- or -NR- between carbon atoms wherein R is a hydrogen atom or an alkyl group having 1 to 5 carbon atoms).
[8] The method for reinforcing a fouling control coating described in [7], wherein R³s in the general formula [III] are alkyl and/or aryl groups.
[9] The method for reinforcing a fouling control coating described in any of [1] to [8], which is applied to a substrate used in water.
[10] A fouling control substrate obtained by applying the method for reinforcing a fouling control coating described in any of [1] to [9] to at least part of a surface of a substrate.
[11] The fouling control substrate described in [10] wherein the substrate is any of a marine vessel, an underwater structure and a fishing gear.
[12] The fouling control substrate described in [10] or [11], which is used in water.

### ADVANTAGEOUS EFFECTS OF INVENTION

According to the present invention, high impact resistance can be imparted to fouling control coatings. As a result, the peeling, chipping and loss of the coatings by external physical damages which are often encountered in the conventional coatings can be remedied, and stable antifouling performance can be obtained. Other advantages that can be enjoyed include the reduction of the area to be coated at the time of repair coating applications.

### DESCRIPTION OF EMBODIMENTS

The present invention will be described in detail hereinbelow.

A method for reinforcing a fouling control coating according to the present invention comprises:
a step of forming a reinforcing coating (O) by applying and curing a reinforcing coating composition [o], and
a step of providing a fouling control coating (X) formed by applying and curing a fouling control coating composition [x], onto the reinforcing coating (O).

The reinforcing coating composition [o] comprises an organopolysiloxane (AO) having two or more silanol groups or hydrolyzable groups in the molecule, and a specific pyrithione salt compound (BO).

The fouling control coating composition [x] comprises an organopolysiloxane (AX) having two or more silanol groups or hydrolyzable groups in the molecule, and an antifouling agent (BX) .

The content of the pyrithione salt compound (BO) in the reinforcing coating (O) is not more than 10 wt%.

The reinforcing coating (O) gives reinforcement to the fouling control coating (X).

### (Ingredients)

Hereinbelow, the ingredients of the reinforcing coating composition [o] and the fouling control coating composition [x] will be described.

### (AO) and (AX) : Organopolysiloxanes having two or more silanol groups or hydrolyzable groups in the molecule

The reinforcing coating composition [o] of the invention contains an organopolysiloxane (AO) having two or more silanol groups or hydrolyzable groups in the molecule. The fouling control coating composition [x] of the invention contains an organopolysiloxane (AX) having two or more silanol groups or hydrolyzable groups in the molecule. These organopolysiloxanes (AO) and (AX) may be of the same type or different types.

The organopolysiloxanes (AO) and (AX) having two or more silanol groups or hydrolyzable groups in the molecule may be any compounds which include a -Si-O-Si-O- chain structure in the main chain and have two or more silanol groups or hydrolyzable groups in the molecule.

Preferably, the organopolysiloxanes (AO) and (AX) used in the invention are each a compound represented by the following general formula [II]:

(W)ᵣR²₍₃₋ᵣ₎Si-O-(SiR²₂-O)ₛ-SiR²₍₃₋ᵣ₎(W)ᵣ ··· [II]

(In the formula [II], W independently at each occurrence is a hydroxyl group or a hydrolyzable group,
R² independently at each occurrence is a hydrogen atom, an alkyl group having 1 to 10 carbon atoms, an alkenyl group having 2 to 10 carbon atoms, an aryl group having 6 to 10 carbon atoms, an aralkyl group having 7 to 10 carbon atoms, an alkoxy group having 1 to 10 carbon atoms, or a halogenated alkyl group having 1 to 10 carbon atoms,
r is an integer of 1 to 3, and
s is an integer of 10 to 10,000.)

In the general formula [II], W independently at each occurrence is a hydroxyl group or a hydrolyzable group.

Examples of the hydrolyzable groups include alkoxy groups, oxime groups, acetyloxy groups, acyloxy groups, alkenyloxy groups, iminoxy groups, amino groups, amide groups and aminoxy groups, with alkoxy groups and oxime groups being preferable.

Preferred alkoxy groups are those having a total number of carbon atoms of 1 to 10, and an oxygen atom may be present between one or more pairs of carbon atoms. Examples of such alkoxy groups include methoxy group, ethoxy group, propoxy group, butoxy group, methoxyethoxy group and ethoxyethoxy group.

Preferred oxime groups are those having a total number of carbon atoms of 1 to 10, with examples including dimethyl ketoxime, methyl ethyl ketoxime, diethyl ketoxime and methyl isopropyl ketoxime.

Preferred acetyloxy groups are aliphatic acetyloxy groups having a total number of carbon atoms of 1 to 10, and aromatic acetyloxy groups having a total number of carbon atoms of 6 to 12, with examples including acetoxy group, propyloxy group, butyloxy group and benzoyloxy group.

Preferred acyloxy groups are aliphatic or aromatic acyloxy groups represented by the formula: RCOO- (wherein R is an alkyl group having 1 to 10 carbon atoms or an aromatic group having 6 to 12 carbon atoms), with examples including acetoxy group, propionoxy group, butyloxy group and benzoyloxy group.

Preferred alkenyloxy groups are those having a total number of carbon atoms of 3 to 10, with examples including isopropenyloxy group, isobutenyloxy group and 1-ethyl-2-methylvinyloxy group.

Preferred iminoxy groups (=N-OH, other names are oxyimino groups and ketoxime groups) are those having a total number of carbon atoms of about 3 to 10, with examples including ketoxime group, dimethyl ketoxime group, methyl ethyl ketoxime group, diethyl ketoxime group, cyclopentanoxime group and cyclohexanoxime group.

Preferred amino groups are those having a total number of carbon atoms of 1 to 10, with examples including N-methylamino group, N-ethylamino group, N-propylamino group, N-butylamino group, N,N-dimethylamino group, N,N-diethylamino group and cyclohexylamino group.

Preferred amide groups are those having a total number of carbon atoms of 2 to 10, with examples including N-methylacetamide group, N-ethylacetamide group and N-methylbenzamide group.

Preferred aminoxy groups are those having a total number of carbon atoms of 2 to 10, with examples including N,N-dimethylaminoxy group and N,N-diethylaminoxy group.

In the general formula [II], R² independently at each occurrence is a hydrogen atom, an alkyl group having 1 to 10 carbon atoms, an alkenyl group having 2 to 10 carbon atoms, an aryl group having 6 to 10 carbon atoms, an aralkyl group having 7 to 10 carbon atoms, an alkoxy group having 1 to 10 carbon atoms, or a halogenated alkyl group having 1 to 10 carbon atoms.

Examples of the alkyl groups include methyl group, ethyl group, propyl group, butyl group, pentyl group, hexyl group and heptyl group.

Examples of the alkenyl groups include vinyl group, allyl group, propenyl group, isopropenyl group, butenyl group, isobutenyl group, pentenyl group, heptenyl group, hexenyl group and cyclohexenyl group.

Examples of the aryl groups include phenyl group, tolyl group, xylyl group and naphthyl group.

Examples of the aralkyl groups include benzyl group and 2-phenylethyl group.

Examples of the alkoxy groups include methoxy group, ethoxy group, propoxy group, butoxy group, methoxyethoxy group and ethoxyethoxy group.

Examples of the halogenated alkyl groups include groups resulting from the substitution of the above alkyl groups with halogen atoms such as fluorine atoms, chlorine atoms, bromine atoms and iodine atoms in place of part or all of the hydrogen atoms.

R²s are particularly preferably methyl groups.

In the general formula [II], r is an integer of 1 to 3. When W is a hydroxyl group, r is preferably 1. When W is a hydrolyzable group, r is preferably 2.

In the general formula [II], s is an integer of 10 to 10, 000, and preferably 100 to 1,000.

In the organopolysiloxanes (AO) and (AX) having two or more silanol groups or hydrolyzable groups in the molecule, the weight average molecular weight measured by gel permeation chromatography (GPC) relative to polystyrene is preferably 500 to 1,000,000, more preferably 5,000 to 100,000, and still more preferably 10,000 to 50,000. The viscosity thereof at 23°C is preferably 20 to 100,000 mPa·s, more preferably 100 to 10,000 mPa·s, and still more preferably 500 to 5,000 mPa·s. These weight average molecular weight and viscosity are advantageous in that the coating compositions used to form an antifouling coating stack attain excellent production workability, sprayability and coating curability, and form coatings with excellent strength.

The organopolysiloxanes (AO) and (AX) having two or more silanol groups or hydrolyzable groups in the molecule are usually present in the reinforcing coating composition [o] and the fouling control coating composition [x], respectively, in an amount of 20 to 90 wt%, and preferably 50 to 70 wt%. The organopolysiloxanes (AO) and (AX) usually each represent 30 to 95 wt%, and preferably 60 to 90 wt% of the weight of the solids contained in the reinforcing coating composition [o] or the fouling control coating composition [x], namely, the weight of the reinforcing coating (O) or the fouling control coating (X), respectively. When the contents of the organopolysiloxanes (AO) and (AX) are in these ranges, the obtainable antifouling coating stack attains good coating strength and rubber elasticity and exhibits long-term antifouling properties.

The organopolysiloxanes (AO) and (AX) may be produced or purchased. Examples of the commercial products include "DMS-S35" (manufactured by GELEST).

The organopolysiloxane (AO) present in the reinforcing coating composition [o] and the organopolysiloxane (AX) present in the fouling control coating composition [x] may be of the same type or different types.

### (BO): Pyrithione salt compounds

In the invention, the reinforcing coating composition [o] for forming a reinforcing coating (O) contains a pyrithione salt compound (BO) represented by the following general formula [I] : 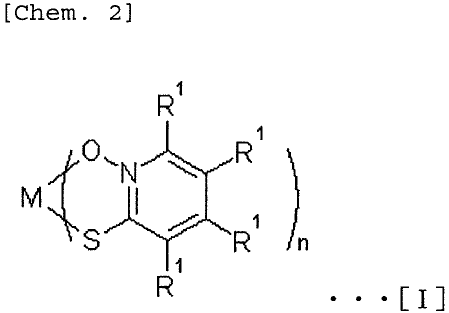
(In the formula [I], R¹ independently at each occurrence is a hydrogen atom, an alkyl group having 1 to 6 carbon atoms, a cycloalkyl group having 3 to 6 carbon atoms, an alkenyl group having 2 to 6 carbon atoms, an aryl group having 6 carbon atoms, an alkoxy group having 1 to 6 carbon atoms, or a halogenated alkyl group having 1 to 6 carbon atoms,
M is a metal selected from Cu, Zn, Na, Mg, Ca, Ba, Fe and Sr, and
n is the valence of the metal M.)

In the general formula [I], M is preferably Cu and/or Zn, and more preferably Zn.

The pyrithione salt compound (BO) is present in an amount of not more than 10 wt% relative to the weight of the solids in the reinforcing coating composition [o], namely, the weight of the reinforcing coating (O) obtained by curing the reinforcing coating composition [o]. The amount is preferably not more than 5.5 wt%, and more preferably 2 to 5 wt%. This content of the pyrithione salt compound (BO) ensures that the composition will give an excellent reinforcement to the fouling control coating.

The content (wt%) of the pyrithione compound (BO) in the reinforcing coating (O) is smaller than the content (wt%) of the antifouling agent (BX) in the fouling control coating (X) described later. In this case, the reinforcing coating (O) gives a higher reinforcement to the fouling control coating (X).

### (BX): Antifouling agents

In the invention, the fouling control coating composition [x] for forming a fouling control coating (X) contains an antifouling agent (BX).

The antifouling agent (BX) may be organic or inorganic.

Examples of the organic antifouling agents include pyrithione salt compounds represented by the general formula [I], p-isopropylpyridine methyldiphenyl borane, pyridine triphenyl borane, tetramethylthiuram disulfide, carbamate-based compounds (for example: zinc dimethyldithiocarbamate, manganese(II) ethylenebisdithiocarbamate), 2,4,5,6-tetrachloroisophthalonitrile, 2-(p-chlorophenyl)-3-cyano-4-bromo-5-trifluoromethylpyrrol e, (RS)-4-[1-(2,3-dimethylphenyl)ethyl]-3H-imidazole and 4,5-dichloro-N-octyl-4-isothiazolin-3-one. It is preferable that the antifouling agent(s) (BX) used include a pyrithione salt compound represented by the general formula [I], more preferably include a pyrithione salt compound represented by the general formula [I] in which M is Cu and/or Zn, and still more preferably be a pyrithione salt compound represented by the general formula [I] in which M is Cu. It is also preferable that when the pyrithione salt compound (BO) in the reinforcing coating (O) is a compound of the general formula [I] in which M is Zn, the antifouling agent (BX) in the fouling control coating (X) be a compound of the general formula [I] in which M is Cu.

The antifouling agents (BX) may be used singly, or a plurality of different types may be used in combination.

The antifouling agent (BX) is usually present in an amount of 0.5 to 30 wt%, preferably 2 to 15 wt%, and more preferably 2.5 to 10 wt% relative to the weight of the solids in the fouling control coating composition [x], namely, the weight of the fouling control coating (X) obtained by applying and curing the fouling control coating composition [x]. It is preferable that the content (wt%) of the antifouling agent (BX) in the fouling control coating (X) be larger than the content (wt%) of the pyrithione compound (BO) in the reinforcing coating (O) described hereinabove. This content of the antifouling agent (BX) ensures that the obtainable fouling control coating will have high antifouling properties and excellent durability.

### ·Optional ingredients

The reinforcing coating composition [o] and the fouling control coating composition [x] of the invention each may contain optional ingredients other than the organopolysiloxane (AO) or (AX), and the pyrithione salt compound (BO) or the antifouling agent (BX). Examples of such optional ingredients include (C) organopolysiloxanes other than the organopolysiloxanes (AO) or (AX), (D) curing catalysts, (E) organosilanes having two or more hydrolyzable groups in the molecule and/or partial hydrolytic condensates thereof, (F) silane coupling agents, (G) silicas, (H) fillers, (I) organic solvents, (J) anti-sag, anti-settling agents, (K) additional coating ingredients, (L) inorganic dehydrating agents and (M) other additive ingredients.

### (C): Organopolysiloxanes other than (AO) or (AX)

Where necessary, the reinforcing coating composition [o] and the fouling control coating composition [x] of the invention each may contain an organopolysiloxane (C) other than (AO) or (AX) .

A preferred organopolysiloxane (C) other than (AO) or (AX) may be represented by the following general formula [III] :

R³-(SiR³₂-O)ᵤ-SiR³₃ ··· [III]

(In the formula [III], u is an integer of 1 to 10,000, and
R³ independently at each occurrence is an alkyl group having 1 to 30 carbon atoms, an alkenyl group having 2 to 30 carbon atoms, an aryl group having 6 to 30 carbon atoms, an aralkyl group having 7 to 10 carbon atoms, or a halogenated alkyl group having 1 to 30 carbon atoms, and may contain -O-, -S- or -NR- between carbon atoms wherein R is a hydrogen atom or an alkyl group having 1 to 5 carbon atoms.)

Such organopolysiloxanes (C) may be produced or purchased. Examples of the commercial organopolysiloxanes (C) include polyorganosiloxanes of the formula [III] in which R³s are methyl groups and phenyl groups (such as, in trade names, "KF-54", "KF-56" and "KF-50" (manufactured by Shin-Etsu Chemical Co., Ltd.), "SH510" and "SH550" (manufactured by Dow Corning Toray Co., Ltd.), and "TSF431" (manufactured by Toshiba Silicone)) ; and polyorganosiloxanes of the formula [III] in which R³s are alkyl groups and ether-containing alkyl groups (such as, in trade name, "KF-6017" (manufactured by Shin-Etsu Chemical Co. , Ltd.)).

In the reinforcing coating composition [o] and/or the fouling control coating composition [x], the content of the organopolysiloxane (C) is usually 0 to 20 wt%, and preferably 0 to 7 wt%. This content of the organopolysiloxane (C) ensures that the reinforcing coating composition [o] of the invention attains good adhesion with the substrate and the fouling control coating composition [x] achieves good adhesion with respect to the base and exhibits good antifouling properties.

### (D): Curing catalysts

Where necessary, the reinforcing coating composition [o] and the fouling control coating composition [x] each may contain a curing catalyst (D).

The curing catalyst (D) may be suitably a curable catalyst. For example, those catalysts described in Japanese Patent No. 2522854 may be suitably used. Specific examples include tin carboxylates such as tin naphthenate and tin oleate; tin compounds such as dibutyltin diacetate, dibutyltin acetoacetonate, dibutyltin dioctoate, dibutyltin dilaurate, dibutyltin dioleate, dibutyltin oxide, dibutyltin dimethoxide, dibutyltin dipentanoate, dibutyltin dioctoate, dibutyltin dineodecanoate, dioctyltin dineodecanoate, bis(dibutyltin laurate) oxide, dibutyl bis(triethoxysiloxy)tin, bis(dibutyltin acetate) oxide, dibutyltin bis(ethyl maleate) and dioctyltin bis (ethyl maleate) ; titanate esters or titanium chelate compounds such as tetraisopropoxytitanium, tetra-n-butoxytitanium, tetrakis(2-ethylhexoxy)titanium, dipropoxybis(acetylacetonato)titanium and titanium isopropoxyoctyl glycol; organometallic compounds such as zinc naphthenate, zinc stearate, zinc-2-ethyloctoate, iron-2-ethylhexoate, cobalt-2-ethylhexoate, manganese-2-ethylhexoate, cobalt naphthenate and alkoxyaluminum compounds; aminoalkyl group-substituted alkoxysilanes such as 3-aminopropyltrimethoxysilane and N-β (aminoethyl) γ-aminopropyltrimethoxysilane; amine compounds and salts thereof such as hexylamine, dodecyldodecylamine phosphate, dimethylhydroxylamine and diethylhydroxylamine; quaternary ammonium salts such as benzyltriethylammonium acetate; lower fatty acid salts of alkali metals such as potassium acetate, sodium acetate and lithium oxalate; and guanidyl group-containing silanes or siloxanes such as tetramethylguanidylpropyltrimethoxysilane, tetramethylguanidylpropylmethyldimethoxysilane and tetramethylguanidylpropyltris(trimethylsiloxy) silane.

The curing catalysts (D) may be purchased in the market. Examples of such commercial products include "NEOSTANU-100" (manufactured by NITTO KASEI CO., LTD.).

The curing catalyst (D) is preferably added to the reinforcing coating composition [o] and/or the fouling control coating composition [x] of the invention in the range of 0.01 to 3 wt%, and more preferably in the range of 0.2 wt% to 1 wt%.

When added in the above amount, the curing catalyst (D) promotes the formation of coatings and allows dry coatings to be obtained more quickly. When used in the above amount in the reinforcing coating composition [o], the catalyst provides enhanced adhesion with respect to the substrate.

### (E) : Organosilanes having two or more hydrolyzable groups in the molecule and/or partial hydrolytic condensates thereof

Where necessary, the reinforcing coating composition [o] and the fouling control coating composition [x] each may contain (E) an organosilane having two or more hydrolyzable groups in the molecule and/or a partial hydrolytic condensate thereof.

A preferred organosilane having two or more hydrolyzable groups in the molecule and/or partial hydrolytic condensate thereof (E) is one represented by the following general formula [IV] :

R⁴_{d}SiY_{4-d} ··· [IV]

In the general formula [IV], R⁴ independently at each occurrence is a hydrocarbon group having 1 to 6 carbon atoms.

In the general formula [IV], Y independently at each occurrence is a hydrolyzable group. The hydrolyzable groups are similar to those in the general formula [II]. Alkoxy groups and oxime groups are preferable.

In the general formula [IV], d is an integer of 0 to 2.

The organosilanes and/or partial hydrolytic condensates thereof (E) may be purchased in the market. Examples of commercial tetraethyl orthosilicates include "Ethyl Silicate 28" (manufactured by COLCOAT CO., LTD.) and "ethyl orthosilicate" (manufactured by TAMA CHEMICALS CO., LTD.). Examples of commercial partial hydrolyzates of tetraethyl orthosilicates include "Silicate 40" (manufactured by TAMA CHEMICALS CO., LTD.) and "TES40 WN" (manufactured by WACKER ASAHIKASEI SILICONE CO., LTD.). Example of commercial alkyltrialkoxysilanes include "KBM-13" (manufactured by Shin-Etsu Chemical Co., Ltd.).

In the reinforcing coating composition [o] and/or the fouling control coating composition [x] of the invention, the content of the organosilane and/or partial hydrolytic condensate thereof (E) is usually 0.1 to 50 wt%, preferably 1 to 30 wt%, and more preferably 3 to 15 wt%. This content ensures that the reinforcing coating composition [o] and/or the fouling control coating composition [x] of the invention will maintain an appropriate curing rate and the coatings obtained by curing the compositions will attain excellent coating strength and rubber properties.

### (F): Silane coupling agents

Where necessary, the reinforcing coating composition [o] and the fouling control coating composition [x] of the invention each may contain a silane coupling agent (F).

A preferred silane coupling agent (F) is one represented by the following general formula [V]:

(R⁵O)_{w}R⁶_{(3-w)}Si-R⁷-Z ··· [V]

In the general formula [V], R⁵ and R⁶ are each independently at each occurrence an alkyl group having 1 to 10 carbon atoms, an alkenyl group having 2 to 10 carbon atoms, an aryl group having 6 to 10 carbon atoms, or a halogenated alkyl group having 1 to 10 carbon atoms. R⁵ is preferably a methyl group or an ethyl group.

The alkyl groups, the alkenyl groups, the aryl groups and the halogenated alkyl groups are similar to those groups in the general formula [II].

In the general formula [V], R⁷ is a bifunctionalhydrocarbon group having 1 to 20 carbon atoms which may contain an amino group, an ether group, a thioether group, an ester group or an amide group between carbon atoms, and is preferably an alkylene group having 4 to 11 carbon atoms containing an amino group between carbon atoms.

In the general formula [V], Z is a polar group, preferably an amino group, an imino group, a glycidyl group, an isocyanate group, a thiol group, a hydrosilyl group or a (meth)acrylate group, and more preferably an amino group.

In the general formula [V], w is an integer of 2 or 3, and preferably 3.

Examples of the silane coupling agents (F) include 3-(2-aminoethyl)aminopropyltrimethoxysilane), 3-aminopropyltrimethoxysilane, 3-aminopropyltriethoxysilane, 3-(2-(2-aminoethyl)aminoethyl)aminopropyltrimethoxysilane, 3-glycidoxypropyltrimethoxysilane, 3-isocyanatopropyltrimethoxysilane, 3-mercaptopropyltrimethoxysilane and N-phenylpropyltrimethoxysilane.

The silane coupling agents (F) may be used singly, or a plurality of types may be used in combination.

In the reinforcing coating composition [o] and/or the fouling control coating composition [x] of the invention, the content of the silane coupling agent (F) is usually 0.01 to 10 wt%, and preferably 0.05 to 2 wt%.

This content of the silane coupling agent (F) ensures that the obtainable coatings will exhibit good adhesion with respect to the base coating or the substrate and will achieve good damage resistance.

### (G): Silicas

Where necessary, the reinforcing coating composition [o] and the fouling control coating composition [x] of the invention each may contain a silica (G).

Examples of the silicas (G) include hydrophilic silicas (non-surface-treated silicas) such as wet process silica (hydrated silica) and dry process silica (fumed silica, anhydrous silica), and surface-treated hydrophobic silicas such as hydrophobic wet silica and hydrophobic fumed silica. The silicas may be used singly, or two or more may be used in combination.

The wet process silica is not particularly limited. For example, that having an adsorbed water content of about 4 to 8%, a bulk density of 200 to 300 g/L, a primary particle diameter of 10 to 30 µm and a specific surface area (a BET surface area) of not less than 10 m²/g may be used.

The dry process silica is not particularly limited. For example, that having a water content of not more than 1.5%, a bulk density of 50 to 100 g/L, a primary particle diameter of 8 to 20 µm and a specific surface area of not less than 10 m²/g may be used.

The hydrophobic fumed silica is obtained by surface-treating the dry process silica with organosilicon compounds such as methyltrichlorosilane, dimethyldichlorosilane, hexamethyldisilazane, hexamethylcyclotrisiloxane and octamethylcyclotetrasiloxane. The hydrophobic fumed silica adsorbs little water over time, and the water content is usually not more than 0.3%, and most often 0.1 to 0.2%. The hydrophobic fumed silica is not particularly limited. For example, that having a primary particle diameter of 5 to 50 µm, a bulk density of 50 to 100 g/L, and a specific surface area of not less than 10 m²/g may be used.

Water adsorbed to the surface of the hydrophobic fumed silica is physically reduced or removed by heat treatment together with the organopolysiloxane described hereinabove. As a result, the water content in the heat-treated hydrophobic fumed silica is usually not more than 0.2%, preferably not more than 0.1%, and still more preferably 0.05 to 0.1%. Other properties such as bulk density are unchanged from the values of the hydrophobic silica before the heat treatment.

The silicas (G) may be purchased in the market. Examples of commercial silicas include "R974" and "RX200" manufactured by NIPPON AEROSIL CO., LTD.

The silica (G) may be kneaded with, prior to the use of the coating composition, a component which includes the organopolysiloxane (AO) or (AX) having two or more silanol groups or hydrolyzable groups in the molecule, or a component which includes the organopolysiloxane (C) other than the organopolysiloxanes (A). Alternatively, the silica (G) may be kneaded with the organopolysiloxane before the preparation of a component including any of the above organopolysiloxanes for the reinforcing coating composition [o] and/or the fouling control coating composition [x] of the invention.

When the silica (G) is used in the form of a kneadate with the above-described organopolysiloxane, the kneadate is preferably a heat-treated product formed by heat treating the organopolysiloxane and the silica (G) beforehand, or is preferably a mixture of the heat-treated product with another portion of the organopolysiloxane that is not heat treated. Such a manner of use is preferable because the heat treatment of the silica (G) with part or the whole of the organopolysiloxane enhances the affinity between the two ingredients and thus provides advantageous effects such as the aggregation of the silica being prevented. For example, this heat treatment may be performed at normal pressure or reduced pressure and at a temperature of not less than 100°C and not more than the decomposition temperatures of the ingredients being mixed, preferably at a temperature of 100 to 300°C, or more preferably 140 to 200°C, usually for about 3 to 30 hours.

The silica (G) is usually added in a ratio of 1 to 100 wt%, preferably 2 to 50 wt%, and more preferably 5 to 30 wt% relative to the weight of the organopolysiloxanes. This content of the silica ensures that the reinforcing coating composition [o] and/or the fouling control coating composition [x] of the invention will exhibit good thixotropic properties and can attain a desired thickness by being applied one time, in particular, by being sprayed one time to form a coating with higher strength and higher hardness. Here, the weight of the organopolysiloxanes means the total weight of the organopolysiloxane (AO) or (AX) and the optional organopolysiloxane (C).

The use of the silica (G) described above provides advantageous effects such as that the stability of the reinforcing coating composition [o] and/or the fouling control coating composition [x] of the invention during their preparation or storage is enhanced, that good fluidity and thixotropic properties are obtained to make it possible to form sufficiently thick coatings by a small number of coating operations even onto vertical surfaces or the like, and that the obtainable coatings attain excellent and well-balanced properties such as hardness, tensile strength and elongation.

### (H): Fillers

Where necessary, the reinforcing coating composition [o] and the fouling control coating composition [x] of the invention each may contain a filler (H).

The fillers (H) may be any known organic or inorganic pigments and other fillers.

Examples of the organic pigments include carbon black, phthalocyanine blue and prussian blue.

Examples of the inorganic pigments include neutral and nonreactive pigments such as titanium white (titanium oxide), red oxide, barite powder, talc, chalk and iron oxide powder; and basic pigments (active pigments) reactive with acidic substances in the coating such as white lead, red lead, zinc powder and lead suboxide powder. Examples of the other fillers include metal oxides such as diatomaceous earth and alumina; metal carbonates such as calcium carbonate, magnesium carbonate and zinc carbonate; and others such as asbestos, glass fibers, quartz powder, aluminum hydroxide, gold powder, silver powder, surface-treated calcium carbonate and glass balloons. The surface of these fillers may be treated with silane compounds. These fillers may be used singly, or two or more may be used in combination. Incidentally, the fillers may include various colorants such as dyes.

The addition of the filler (H) to the reinforcing coating composition [o] and/or the fouling control coating composition [x] of the invention results in an increase in coating strength. Further, the filler can conceal an undercoating and prevents the undercoating from UV degradation.

In the reinforcing coating composition [o] and/or the fouling control coating composition [x] of the invention, the content of the filler (H) is preferably 0.1 to 30 wt%.

### (I): Organic solvents

Where necessary, the reinforcing coating composition [o] and the fouling control coating composition [x] of the invention each may contain an organic solvent (I).

Examples of the organic solvents (I) include aromatic hydrocarbons, aliphatic hydrocarbons, alicyclic hydrocarbons, ketones and esters. Aromatic hydrocarbons are preferable.

Examples of the aromatic hydrocarbon organic solvents include toluene, xylene, styrene and mesitylene.

Examples of the aliphatic hydrocarbon organic solvents include pentane, hexane, heptane and octane.

Examples of the alicyclic hydrocarbon organic solvents include cyclohexane, methylcyclohexane and ethylcyclohexane.

Examples of the ketone organic solvents include acetone, methyl ethyl ketone, methyl isobutyl ketone and dimethyl carbonate.

Examples of the ester organic solvents include propylene glycol monomethyl ether acetate.

The addition of the organic solvent (I) decreases the viscosity of the reinforcing coating composition [o] and/or the fouling control coating composition [x] of the invention, resulting in an enhancement in coating workability.

A preferred content of the organic solvent (I) in the reinforcing coating composition [o] or the fouling control coating composition [x] is determined based on the desired viscosity depending on factors such as the manner in which the reinforcing coating composition [o] and/or the fouling control coating composition [x] of the invention is applied. The content in the coating composition is usually 0 to 50 wt%. If the content is excessively high, problems such as poor anti-sagging properties are sometimes caused.

### (J): Anti-sag, anti-settling agents

Where necessary, the reinforcing coating composition [o] and the fouling control coating composition [x] of the invention each may contain an anti-sag, anti-settling agent (J).

Examples of the anti-sag, anti-settling agents (J) include organic waxes (such as polyethylene wax, oxidized polyethylene wax, amide wax, polyamide wax and hydrogenated castor oil wax), organic clay waxes (such as stearate salts, lecithin salts and alkylsulfonate salts of Al, Ca and Zn), mixtures of organic clay waxes and organic waxes, and organopolysiloxanes containing polar groups (except hydrolyzable groups).

The anti-sag, anti-settling agents (J) may be purchased in the market. Examples of such commercial organic waxes include those sold under the trade names of "Disparlon 305" and "Disparlon 4200-20" manufactured by Kusumoto Chemicals, Ltd. Examples of commercial polar group-containing organopolysiloxanes include "FZ-2191" (alkylene glycol-modified silicone oil manufactured by Dow Corning Toray Co., Ltd.) and "BY16-839" (alicyclic epoxy-modified silicone oil manufactured by Dow Corning Toray Co., Ltd.).

In the reinforcing coating composition [o] and/or the fouling control coating composition [x] of the invention, the content of the anti-sag, anti-settling agent (J) is usually 0.01 to 10 wt%, and preferably 0.1 to 3 wt%. This content of the anti-sag, anti-settling agent (J) ensures that the reinforcing coating composition [o] and/or the fouling control coating composition [x] of the invention will be enhanced in anti-sagging properties and can be applied in a large thickness, and also ensures that good adhesion with respect to the substrate will be obtained.

### (K): Additional coating ingredients

While still achieving the objects of the invention, the reinforcing coating composition [o] and/or the fouling control coating composition [x] of the invention may contain an additional coating ingredient (K) other than the organopolysiloxanes which are the main resin ingredients.

Examples of the additional coating ingredients (K) include resins that are poorly soluble or insoluble in water such as acrylic resins, acrylic silicone resins, unsaturated polyester resins, fluororesins, polybutene resins, silicone rubbers, urethane resins (rubbers), polyamide resins, vinyl chloride copolymer resins, chlorinated rubbers (resins), chlorinated olefin resins, styrene-butadiene copolymer resins, ethylene-vinyl acetate copolymer resins, vinyl chloride resins, alkyd resins, coumarone resins, trialkylsilyl acrylate (co)polymers (silyl resins) and petroleum resins.

### (L): Inorganic dehydrating agents

Where necessary, the reinforcing coating composition [o] and the fouling control coating composition [x] of the invention each may contain an inorganic dehydrating agent (L).

Examples of the inorganic dehydrating agents (L) include anhydrous gypsum (CaSO₄), synthetic zeolite adsorbents (such as Molecular Sieve (trade name)) and silicates. Anhydrous gypsum and Molecular Sieve are preferably used. The inorganic dehydrating agents may be used singly, or two or more may be used in combination.

The inorganic dehydrating agent (L) serves also as a stabilizer. In the reinforcing coating composition [o] and/or the fouling control coating composition [x] of the invention, this ingredient prevents a degradation of the composition by water present therein and thus provides a further enhancement in storage stability. In the reinforcing coating composition [o] and/or the fouling control coating composition [x] of the invention, the content of the inorganic dehydrating agent (L) is preferably 0.1 to 10 wt%.

### (M): Other additives

The reinforcing coating composition [o] and the fouling control coating composition [x] of the invention each may contain other additives (M) in amounts that do not make it impossible to achieve the objects of the invention. Such additives (M) may be any known additives used in paints, with examples including flame retardants, thixotropic agents and thermal conductivity improvers.

Examples of the flame retardants include antimony oxide and oxidized paraffin.

Examples of the thixotropic agents include polyethylene glycol, polypropylene glycol and derivatives thereof.

Examples of the thermal conductivity improvers include boron nitride and aluminum oxide.

### (Preparation of reinforcing coating composition [o]/fouling control coating composition [x])

The reinforcing coating composition [o] and the fouling control coating composition [x] each may be prepared by mixing the ingredients described hereinabove.

The reinforcing coating composition [o] and/or the fouling control coating composition [x] each may be provided as a one-part paint composed of a single component, or as a multi-part paint composed of two or more components. In the case of a two-part or multi-part paint, the reinforcing coating composition [o] and/or the fouling control coating composition [x] of the invention is prepared by mixing the components together. The reinforcing coating composition [o] and/or the fouling control coating composition [x] may be prepared by mixing the aforementioned raw materials simultaneously or successively by stirring. When the coating composition or the component is prepared by successive addition of the raw materials, the order of addition is not particularly limited. When the coating composition involves the silica (G), it is preferable that the silica (G) be added in the form of a silica-containing organopolysiloxane prepared by mixing the silica (G) with at least part of the organopolysiloxane or by heating such a mixture.

### Kits for reinforcing coating composition [o]/fouling control coating composition [x]

When the reinforcing coating composition [o] and/or the fouling control coating composition [x] of the invention is provided as a two-part or multi-part paint, each of the components (liquids) contains one or more ingredients and is packed separately and stored in a container such as a can. At the time of coating operation, the contents in the components are mixed together by stirring to give a reinforcing coating composition [o] and/or a fouling control coating composition [x]. That is, in an aspect, the present invention provides a kit(s) including such components for preparing the reinforcing coating composition [o] and/or the fouling control coating composition [x] of the invention.

As already described, the reinforcing coating composition [o] and/or the fouling control coating composition [x] of the invention contains the organopolysiloxane (AO) or (AX) having 2 or more silanol groups or hydrolyzable groups in the molecule, and optionally further contains the additional organopolysiloxane (C). A preferred multi-part paint kit(s) for the reinforcing coating composition [o] and/or the fouling control coating composition [x] includes a "base component" which contains the organopolysiloxane that is the main binder resin of the coating composition, and a "curing agent component" which contains a compound that reacts with the polyorganosiloxane to form a crosslinked structure. Additives for the coating composition may be added to the base component or the curing agent component. An additional component such as an "additive component" is preferably added to the paint kit which includes a compound that is reactive with the compounds present in the base component and in the curing agent component and is to be stored separately in order to avoid problems such as deterioration. The use of such an additive component is also preferable when the amount of the additives needs to be controlled during their addition depending on use application. That is, the reinforcing coating composition [o] and/or the fouling control coating composition [x] of the invention may be provided in the form of, for example, a two-part kit including a base component and a curing agent component, or as a three-part kit including a base component, a curing agent component and an additive component.

### (Fouling control coatings and fouling control substrates)

A reinforcing coating (O) and a fouling control coating (X) of the invention may be obtained by applying and curing the reinforcing coating composition [o] and the fouling control coating composition [x], respectively.

The invention involves a step of forming a reinforcing coating (O) by applying and curing the reinforcing coating composition [o], and a step of providing a fouling control coating (X) formed by applying and curing the fouling control coating composition [x], onto the reinforcing coating (O). The fouling control coating (X) may be formed by directly applying the fouling control coating composition [x] onto the reinforcing coating (O) and curing the composition, or the composition may be applied and cured separately and the resultant fouling control coating (X) may be attached onto the reinforcing coating (O). A binder coating layer may be disposed between the reinforcing coating (O) and the fouling control coating (X). The reinforcing coating (O) of the invention is disposed under the fouling control coating (X).

In the invention, the coating compositions are applied and cured. In the invention, the term coating operation comprehends general methods which spread the coating compositions, such as application with brushes or rollers, spraying, impregnation and casting.

Specifically, the reinforcing coating composition [o] and/or the fouling control coating composition [x] may be applied onto a substrate or may be allowed to impregnate a substrate by a method in which the reinforcing coating composition [o] and/or the fouling control coating composition [x], after being sufficiently agitated, is applied to the substrate or is allowed to impregnate the substrate by spraying or other technique. A specific example method for curing the reinforcing coating composition [o] and/or the fouling control coating composition [x] spread on the substrate by application or impregnation is to allow the composition to stand in the air at normal temperature for about 0.5 to 3 days or to heat the composition while forcibly blowing air. Where necessary, an undercoating may be applied to the substrate before the application of the reinforcing coating composition [o].

A reinforcing coating (O) and/or a fouling control coating (X) of the invention may be formed beforehand and then attached onto a substrate. That is, the reinforcing coating composition [o] and the fouling control coating composition [x] may be applied and cured successively onto such as a film, and the resultant fouling control film may be attached onto a substrate. An example method is such that a fouling control film obtained by curing the reinforcing coating composition [o] and/or the fouling control coating composition [x] is attached onto a substrate using a known technique such as one described in JP-A-2013-129724. Suchamethod, similarly to the methods described above, results in an antifouling substrate in which a substrate is coated with an antifouling coating.

The reinforcing coating (O) and/or the fouling control coating (X) of the invention may be formed in desired thickness in accordance with factors such as use application. Usually, the reinforcing coating composition [o] and/or the fouling control coating composition [x] are each applied one or more times in a thickness of 30 to 400 µm per coating operation, or preferably 50 to 300 µm per coating operation, and are thereafter cured. Here, a composite coating having excellent coating strength and antifouling performance may be obtained by ensuring that the total film thickness after curing is, for example, 100 to 1000 µm.

The reinforcing coating composition [o] and/or the fouling control coating composition [x] of the invention can be applied using a wide range of known application techniques such as brushes, rollers, sprayers and dip coaters. The reinforcing coating composition [o] and/or the fouling control coating composition [x] of the invention has characteristics suited for spraying.

In a wide range of industrial fields such as power generation, port and civil engineering construction, and marine vessels (building and repairing), the composite coatings including the reinforcing coating (O) and the fouling control coating (X) of the invention may be used to protect the surface of substrates to be placed in contact with seawater or fresh water from the attachment of marine organisms and thereby to allow the substrates to maintain their normal functions for long periods. Examples of such substrates include marine vessels (such as marine vessel shells), fishery materials (such as ropes, fishing nets, fishing gears, floats and buoys), underwater structures such as water supply inlets and drains in thermal power plants and nuclear power plants, seawater equipment (such as seawater pumps), mega-floats, coast roads, submarine tunnels, port facilities, and sludge diffusion prevention films in various offshore construction works for building structures such as canals and waterways.

The reinforcing coating composition [o] of the invention may be applied directly to the substrate to coat or impregnate the substrate. Even in the case where the reinforcing coating composition [o] of the invention is applied directly to substrates made of such materials as fiber-reinforced plastics (FRPs), steel, wood and aluminum alloys, for example, water supply inlets and drains in nuclear power plants, mega-floats and marine vessels, the composition exhibits good adhesion with respect to the surface of these substrates (materials).

Further, the surface of the substrate to which the reinforcing coating composition [o] of the invention will be applied may be already coated with an undercoating. That is, the inventive reinforcing coating composition [o] may be applied to the surface of substrates such as marine vessels or underwater structures already coated with base coatings (undercoatings) such as antirust agents or primers. Furthermore, the reinforcing coating composition [o] and/or the fouling control coating composition [x] of the invention may be applied as overcoatings to repair the surface of substrates such as marine vessels, in particular FRP boats, and underwater structures that have been already coated with conventional antifouling coatings or with the fouling control coatings (X) of the invention. The reinforcing coating composition [o] and/or the fouling control coating composition [x] of the invention may be placed in direct contact with any types of coatings without limitation. Similarly to general organopolysiloxane antifouling paints, for example, the inventive coating compositions may be applied to coatings formed from paints based on resins such as epoxy resins, urethane resins and silicone resins. The reinforcing coating composition [o] and/or the fouling control coating composition [x] according to the present invention can be prepared to exhibit good adhesion with respect to the surface of such coatings.

The reinforcing coating (O) lies under the fouling control coating (X) of the invention. As long as this requirement is met, the reinforcing coating (O) and the fouling control coating (X) may have a dissimilar coating such as a binder coating therebetween.

### EXAMPLES

Hereinbelow, the present invention will be described in greater detail based on Examples without limiting the scope of the invention to such Examples.

### Evaluation methods

In Examples and Comparative Examples below, properties were measured and evaluated by the following methods.

### [Damage resistance test]

A test plate was fixed 50 cm away from a spray nozzle of a high-pressure cleaner (GCT-2015 (manufactured by Komatsu Fork Lift Japan Ltd.)). The spray pattern was focused to the minimum, and the test plate was washed with water at a discharge pressure of 10 MPa and a moving speed of 7 cm/s.

After the washing, the proportion (%) of the area of the portion of the fouling control coating (X) as the top coating that had been lost and showed the urethane undercoating or the reinforcing coating (O) was evaluated.

### [Evaluation of fouling control performance]

Coated test plates fabricated in Examples and Comparative Examples were immersed in seawater off the Miyajima Bay, Hiroshima, Japan, under static conditions. After 12 months, the areas fouled by organisms on the surface of the test plates were evaluated by visual observation and were rated as follows .

### (Rating in fouling control performance test)

0: No aquatic organisms had become attached.
1: Aquatic organisms had become attached locally.
2: Aquatic organisms had become attached to the entire surface.

### Reinforcing coating compositions [o] and fouling control coating compositions [x]

### • Ingredients

The ingredients used in the preparation of reinforcing coating compositions [o-1] to [o-13] and fouling control coating compositions [x-1] to [x-12] are described in Table 1.

Silica-containing organopolysiloxanes I, II and III each included the organopolysiloxane and hydrophobized silica or silica described in Table 1. The content (wt%) of the hydrophobized silica or the silica is shown, the balance being the organopolysiloxane.

### [Table 1]

**Table 1**

| Ingredients | Data including general names and chemical formulae |
|---|---|
| Silica-containing organopolysiloxane I | HO-[Si(CH₃)₂-O-]ₙ-H, weight average molecular weight 28,500 |
| | Hydrophobized silica (5 wt% in ingredient) |
| Silica-containing organopolysiloxane II | (MEKO)₂(CH₂=CH-)SiO-[Si(CH₃)₂-O-]ₙ-Si(CH=CH₂)(MEKO)₂, weight average molecular weight 35,000 |
| | Silica (10 wt% in ingredient) |
| Silica-containing organopolysiloxane III | (MEKO) ₂ (CH₂=CH-)SiO-[Si(CH₃) ₂-O-]ₙ-Si (CH=CH₂) (MEKO)₂, weight average molecular weight 35,000 |
| | Hydrophobized silica (10 wt% in ingredient) |
| White pigment | Titanium (IV) oxide |
| Black pigment | Triiron tetraoxide |
| Zinc pyrithione (ZnPT) | Zn(-S-C₅H₄N-O-)₂ |
| Copper pyrithione (CuPT) | Cu(-S-C₅H₄N-O-)₂ |
| Cuprous oxide | Cu₂O, average particle size 8 mic., stearic acid-treated surface |
| Copper rhodanide | CuSCN |
| KM-2 | 4-Isopropylpyridine-diphenylmethylborane |
| Organosilane partial hydrolytic condensate | H₅C₂O-[Si(OC₂H₅)₂-O-]ₙ-C₂H₅ |
| Phenyl-modified organopolysiloxane | H₃C-[Si(CH₃) ₂-O-] ₙ-[Si(C₆H₅) ₂-O-] ₘ-CH₃ Phenyl modification rate 5%, 3,000 mPa·s |
| Ether-modified organopolysiloxane I | H₃C-[Si(CH₃)₂-O-]ₙ-[Si(CH₃)((-R-O-)ₗ-R)-]ₘ-CH₃ 52.5% methoxypropyl acetate solution, 27.5 mPa·s |
| Ether-modified organopolysiloxane II | H₃C-[Si(CH₃)₂-O-]ₙ-[Si(CH₃)((-R-O-)ₗ-R)-)ₘ-CH₃ 250 mPa·s |
| Epoxy-modified organopolysiloxane | H₃C-[Si(CH₃)₂-O-]ₙ-[Si(CH₃)(-R-C₆OH₈)-O-]ₘ-CH₃ |
| Tin catalyst | Dibutyltin dilaurate |
| Silane coupling agent I | 3-(2-Aminoethylamino)propyltrimethoxysilane |
| Silane coupling agent II | 3-(2-(2-Aminoethylamino)ethylamino)propyltrimethoxysilane |

| | |
|---|---|
| *In Table 1, MEKO indicates methyl ketoxime. | |

### [Production Examples 1 to 13] (Production of reinforcing coating compositions [o-1] to [o-13])

Kits for a reinforcing coating composition (three-part kits) including three components: a basecomponent (1), a curing agent component (2) and an additive component (3) were prepared by mixing the ingredients described in Table 2 together by stirring in the amounts (parts by weight) shown in the table.

For coating applications, reinforcing coating compositions ([o-1], [o-2], [o-3], [o-4], [o-5], [o-6], [o-7], [o-8], [o-10] and [o-11]) were prepared using the kits obtained above. Specifically, the base component (1), the curing agent component (2) and the additive component (3) in the amounts shown in Table 2 were mixed together sufficiently to uniformity by being stirred with use of a disperser.

Further, one-part reinforcing coating compositions ([o-9], [o-12] and [o-13]) were prepared by mixing the ingredients described in Table 2 together by stirring in the amounts (parts by weight) shown in the table.

Table 2 also describes the content (wt%) of pyrithione salt compound in each of the reinforcing coating compositions obtained, and the content (wt%) of pyrithione salt compound in the solids of the paint (the coating).

### [Table 2]

**Table 2 (Reinforcing coating compositions [o])**

| | Ingredients | Pro. Ex. 1 | Pro. Ex. 2 | Pro. Ex. 3 | Pro. Ex. 4 | Pro. Ex. 5 | Pro. Ex. 6 | Pro. Ex. 7 | Pro. Ex. 8 | Pro. Ex. 9 | Pro. Ex. 10 | Pro. Ex. 11 | Pro. Ex. 12 | Pro. Ex. 13 |
|---|---|---|---|---|---|---|---|---|---|---|---|---|---|---|
| | | o-1 | o-2 | o-3 | o-4 | o-5 | o-6 | o-7 | o-8 | o-9 | o-10 | o-11 | o-12 | o-13 |
| Base component (1) or one-part paint | Silica-containing organopolysiloxane I | 59.8 | 59.8 | 59.8 | 59.8 | 59.8 | 59.8 | 59.8 | 59.8 | | 59.8 | 59.8 | | |
| | Silica-containing organopolysiloxane II | | | | | | | | | 42.0 | | | 42.0 | 42.0 |
| | Silica-containing organopolysiloxane III | | | | | | | | | 13.0 | | | 13.0 | 13.0 |
| | White pigment | 7.7 | 7.7 | 7.7 | 7.7 | 7.7 | 7.7 | 7.7 | 7.7 | 7.7 | 7.7 | 7.7 | 7.7 | 7.7 |
| | Black pigment | 0.1 | 0.1 | 0.1 | 0.1 | 0.1 | 0.1 | 0.1 | 0.1 | 0.1 | 0.1 | 0.1 | 0.1 | 0.1 |
| | Copper pyrithione | 2.0 | 4.0 | 4.0 | | | | | | 4.0 | | 20.0 | | 20.0 |
| | Zinc pyrithione | | | | 4.0 | 8.0 | 2.0 | 2.0 | 2.0 | | | | | |
| | KM-2 | | | | | | 2.0 | | | | | | | |
| | Copper rhodanide | | | | | | | 2.0 | | | | | | |
| | Cuprous oxide | | | | | | | | 2.0 | | | | | |
| | N-butanol | | | | | | | | | | | | | |
| | Organosilane partial hydrolytic condensate | | | | | | | | | 0.5 | | | 0.5 | 0.5 |
| | Dimethylpolysiloxane | | | | | | | | | 3.0 | | | 3.0 | 3.0 |
| | Phenyl-modified organopolysiloxane | | | | | | | | | 7.0 | | | 7.0 | 7.0 |
| | Silane coupling agent I | | | | | | | | | 0.1 | | | 0.1 | 0.1 |
| | Xylene | 9.5 | 11.5 | 11.5 | 9.5 | 9.5 | 9.5 | 9.5 | 9.5 | 26.7 | 9.5 | 40.5 | 26.7 | 40.7 |
| | Subtotal | 79.0 | 83.0 | 83.0 | 81.0 | 85.0 | 81.0 | 81.0 | 81.0 | 104.1 | 77.0 | 128.0 | 100.1 | 134.1 |
| Curing agent component | Organosilane partial hydrolytic condensate | 3.4 | 3.4 | 3.4 | 3.4 | 3.4 | 3.4 | 3.4 | 3.4 | | 3.4 | 3.4 | | |
| | Phenyl-modified organopolysiloxane | 5.7 | 5.7 | 5.7 | 5.7 | 5.7 | 5.7 | 5.7 | 5.7 | | 5.7 | 5.7 | | |
| | Tin catalyst | 0.6 | 0.6 | 0.6 | 0.6 | 0.6 | 0.6 | 0.6 | 0.6 | | 0.6 | 0.6 | | |
| | Acetylacetone | 5.4 | 5.4 | 5.4 | 5.4 | 5.4 | 5.4 | 5.4 | 5.4 | | 5.4 | 5.4 | | |
| | Epoxy-modified organopolysiloxane | 0.1 | 0.1 | 0.1 | 0.1 | 0.1 | 0.1 | 0.1 | 0.1 | | 0.1 | 0.1 | | |
| | Xylene | 2.8 | 2.8 | 2.8 | 2.8 | 2.8 | 2.8 | 2.8 | 2.8 | | 2.8 | 2.8 | | |
| | Subtotal | 18.0 | 18.0 | 18.0 | 18.0 | 18.0 | 18.0 | 18.0 | 18.0 | | 18.0 | 18.0 | | |
| Additive component | Silane coupling agent I | 0.1 | 0.1 | | 0.1 | 0.1 | 0.1 | 0.1 | 0.1 | | 0.1 | 0.1 | | |
| | Silane coupling agent II | | | 0.1 | | | | | | | | | | |
| | Xylene | 4.9 | 4.9 | 4.9 | 4.9 | 4.9 | 4.9 | 4.9 | 4.9 | | 4.9 | 4.9 | | |
| | Subtotal | 5.0 | 5.0 | 5.0 | 5.0 | 5.0 | 5.0 | 5.0 | 5.0 | | 5.0 | 5.0 | | |
| Total | | 102.0 | 106.0 | 106.0 | 104.0 | 108.0 | 104.0 | 104.0 | 104.0 | 104.1 | 100.0 | 151.0 | 100.1 | 134.1 |
| Content (wt%) of pyrithione salt compound in coating composition | | 2.0 | 3.8 | 3.8 | 3.8 | 7.4 | 1.9 | 1.9 | 1.9 | 3.8 | 0.0 | 13.2 | 0.0 | 14.9 |
| Content (wt%) of pyrithione salt compound in coating | | 2.6 | 5.0 | 5.0 | 5.0 | 9.6 | 2.5 | 2.5 | 2.5 | 5.2 | 0.0 | 21.0 | 0.0 | 21.5 |

### [Production Examples 14 to 25] (Production of fouling control coating compositions [x-1] to [x-12])

Kits for a fouling control coating composition (two-part kits) including two components: a base component (1) and a curing agent component (2) were prepared by mixing the ingredients described in Table 3 together by stirring in the amounts (parts by weight) shown in the table.

For coating applications, fouling control coating compositions [x-1] to [x-12] were prepared using the kits obtained above. Specifically, the base component (1) and the curing agent component (2) in the amounts shown in Table 3 were mixed together sufficiently to uniformity by being stirred with use of a disperser.

Table 3 also describes the content (wt%) of antifouling agent in each of the fouling control coating compositions obtained, and the content (wt%) of antifouling agent in the solids of the paint (the coating).

### [Table 3]

**Table 3 (Fouling control coating compositions [x])**

| | Ingredients | Pro. Ex. 14 | Pro. Ex. 15 | Pro. Ex. 16 | Pro. Ex. 17 | Pro. Ex. 18 | Pro. Ex. 19 | Pro. Ex. 20 | Pro. Ex. 21 | Pro. Ex. 22 | Pro. Ex. 23 | Pro. Ex. 24 | Pro. Ex. 25 |
|---|---|---|---|---|---|---|---|---|---|---|---|---|---|
| | | x-1 | x-2 | x-3 | x-4 | x-5 | x-6 | x-7 | x-8 | x-9 | x-10 | x-11 | x-12 |
| (1) Base component | Silica-containing organopolysiloxane I | 59.8 | 59.8 | 59.8 | 59.8 | 59.8 | 59.8 | 59.8 | 59.8 | 59.8 | 59.8 | 59.8 | 59.8 |
| | White pigment | 7.7 | 7.7 | 7.7 | 7.7 | 7.7 | 7.7 | 7.7 | 7.7 | 7.7 | 7.7 | 7.7 | 7.7 |
| | Black pigment | 0.1 | 0.1 | 0.1 | 0.1 | 0.1 | 0.1 | 0.1 | 0.1 | 0.1 | 0.1 | 0.1 | 0.1 |
| | Copper pyrithione | 5.0 | 5.0 | 5.0 | | | | 1.0 | 2.0 | | | 1.0 | 5.0 |
| | Zinc pyrithione | | | | | | | | | 2.0 | 5.0 | | |
| | Cuprous oxide | | | | 10.0 | 10.0 | | | | | | | |
| | N-butanol | | | | 5.0 | 5.0 | | | | | | | |
| | Xylene | 12.5 | 12.5 | 12.5 | 9.5 | 9.5 | 4.5 | 12.5 | 12.5 | 12.5 | 12.5 | 12.5 | 12.5 |
| | Subtotal | 85.0 | 85.0 | 85.0 | 92.0 | 92.0 | 72.0 | 81.0 | 82.0 | 82.0 | 85.0 | 81.0 | 85.0 |
| (2) Curing agent component | Organosilane partial hydrolytic condensate | 3.4 | 3.4 | 3.4 | 2.9 | 2.9 | 3.4 | 3.4 | 3.4 | 3.4 | 3.4 | 3.4 | 3.4 |
| | Phenyl-modified organopolysiloxane | 5.7 | 5.7 | 5.7 | 4.8 | 4.8 | 5.7 | 5.7 | 5.7 | 5.7 | 5.7 | 5.7 | 5.7 |
| | Tin catalyst | 0.6 | 0.6 | 0.6 | 0.5 | 0.5 | 0.6 | 0.6 | 0.6 | 0.6 | 0.6 | 0.6 | 0.6 |
| | Acetylacetone | 5.4 | 5.4 | 5.4 | | | 5.4 | 5.4 | 5.4 | 5.4 | 5.4 | 5.4 | 5.4 |
| | Epoxy-modified organopolysiloxane | 0.1 | 0.1 | 0.1 | | | 0.1 | 0.1 | 0.1 | 0.1 | 0.1 | 0.1 | 0.1 |
| | Ether-modified organopolysiloxane I | 10.0 | 3.0 | | 10.0 | | 10.0 | 10.0 | 10.0 | 10.0 | 10.0 | 6.0 | 20.0 |
| | Ether-modified organopolysiloxane II | | | 10.0 | | 10.0 | | | | | | | |
| | Xylene | 2.8 | 2.8 | 2.8 | 1.9 | 1.9 | 2.8 | 2.8 | 2.8 | 2.8 | 2.8 | 2.8 | 2.8 |
| | Subtotal | 28.0 | 21.0 | 28.0 | 20.0 | 20.0 | 28.0 | 28.0 | 28.0 | 28.0 | 28.0 | 24.0 | 38.0 |
| Total | | 113.0 | 106.0 | 113.0 | 112.0 | 112.0 | 100.0 | 109.0 | 110.0 | 110.0 | 113.0 | 105.0 | 123.0 |
| Content (wt%) of antifouling agent in coating composition | | 4.4 | 4.7 | 4.4 | 8.9 | 8.9 | 0.0 | 0.9 | 1.8 | 1.8 | 4.4 | 1.0 | 4.1 |
| Content (wt%) of antifouling agent in coating | | 5.5 | 6.0 | 5.5 | 10.6 | 10.6 | 0.0 | 1.2 | 2.3 | 2.3 | 5.5 | 1.2 | 5.0 |

### [Examples 1 to 20 and Comparative Examples 1 to 7] (Fabrication of test plates)

Sandblasted steel plates were coated with an epoxy anticorrosive paint (trade name: BANNOH 500, manufactured by CHUGOKU MARINE PAINTS, LTD.) as an undercoating paint 1 so that the dry thickness of the cured film would be 100 µm. The wet films were dried, and the resultant coatings were further coated with, as an undercoating paint 2, A: a urethane paint (trade name: CMP BIOCLEAN SG, manufactured by CHUGOKU MARINE PAINTS, LTD., in Examples 1 to 12 and 14 to 20, and Comparative Examples 1 to 3 and 7) or B: an epoxy paint (trade name: CMP BIOCLEAN SG-R, manufactured by CHUGOKU MARINE PAINTS, LTD., in Example 13 and Comparative Examples 4, 5, and 6) so that the dry thickness of the cured film would be 100 µm. The wet films were dried. Anticorrosive coatings were thus formed.

Next, onto the anticorrosive coatings, the reinforcing coating compositions [o] described in Table 4 were sprayed with a sprayer at normal temperature so that the dry thickness would be 100 µm. After being allowed to stand at normal temperature for one day, the resultant reinforcing coatings (O) were coated by spraying of the fouling control coating compositions [x] described in Table 4 with use of a sprayer at normal temperature so that the dry thickness would be 200 µm. The wet films were dried at normal temperature for one week to form fouling control coatings (X). Test plates were thus prepared.

The test plates obtained were subjected to the damage resistance test and the evaluation of fouling control performance. The results are described in Table 4. Examples 1-4, 6-13 and 18 are according to the invention. Examples 5, 14-17, 19 and 20 are illustrative examples.

### [Table 4]

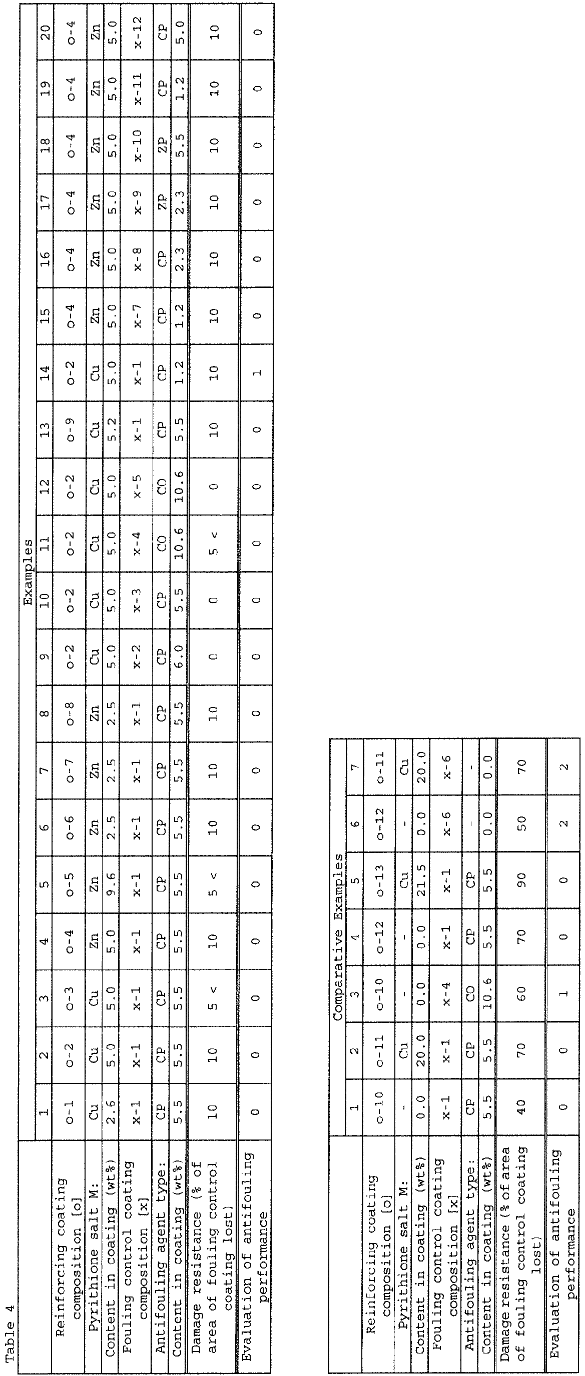

### INDUSTRIAL APPLICABILITY

In structures and substrates used in water such as marine vessels (such as marine vessel shells), fishery materials (such as ropes, fishing nets, fishing gears, floats and buoys), underwater structures such as water supply inlets and drains in thermal power plants and nuclear power plants, seawater equipment (such as seawater pumps), mega-floats, coast roads, submarine tunnels, port facilities, and sludge diffusion prevention films in various offshore construction works for building structures such as canals and waterways, the invention can impart excellent durability to organopolysiloxane fouling control coatings which protect the surface of these structures and substrates from the attachment of aquatic organisms.

## Claims

1. A method for reinforcing a fouling control coating, comprising the steps of:
(i) forming a reinforcing coating (O) by applying and curing a reinforcing coating composition [o] comprising
- an organopolysiloxane (AO) having two or more silanol groups or hydrolyzable groups in the molecule, and
- a pyrithione salt compound (BO) of formula [I]: 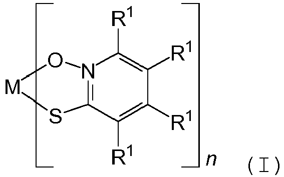 wherein
R¹ each independently is H, optionally halogenated C₁₋₆-alkyl, C₃₋₆-cycloalkyl, C₂₋₆-alkenyl, C₆-aryl or C₁₋₆-alkoxy,
M is a metal selected from Cu, Zn, Na, Mg, Ca, Ba, Fe and Sr, and
*n* is the valence of the metal M); and
(ii) providing, onto the reinforcing coating (O), a fouling control coating (X) formed by applying and curing a fouling control coating composition [x] comprising
- an organopolysiloxane (AX) having two or more silanol groups or hydrolyzable groups in the molecule, and
- an antifouling agent (BX);
wherein the content of the pyrithione salt compound (BO) in the reinforcing coating (O) is not more than 10 wt%,
wherein the reinforcing coating (O) gives reinforcement to the fouling control coating (X) and
wherein the content (wt.-%) of the pyrithione salt compound (BO) in the reinforcing coating (O) is smaller than that of the antifouling agent (BX) in the fouling control coating (X).

2. The method of claim 1, wherein the content of the pyrithione salt compound (BO) in the reinforcing coating (O) is ≤ 5.5 wt.-%.

3. The method of claim 1 or 2, wherein M in formula [I] is Cu and/or Zn.

4. The method of any of claims 1-3, wherein the antifouling agent (BX) is a pyrithione salt compound of formula [I] in which M is Cu.

5. The method of any of claims 1-4, wherein the pyrithione salt compound (BO) is a compound of formula [I] in which M is Zn.

6. The method of any of claims 1-5, wherein the organopolysiloxane (AO) and/or the organopolysiloxane (AX) is represented by formula [II]:
(W)*ᵣ*R²_{(3-*r*)}Si-O-(SiR²₂-O)*ₛ*-SiR²_{(3-*r*)}(W)*ᵣ* [II]
wherein
W each independently is OH or a hydrolyzable group,
R² each independently is H, C₂₋₁₀-alkenyl, C₆₋₁₀-aryl, C₇₋₁₀-aralkyl, C₁₋₁₀-alkoxy, or optionally halogenated C₁₋₁₀-alkyl,
*r* is an integer of 1-3, and
*s* is an integer of 10-10,000.

7. The method of any of claims 1-6, wherein the reinforcing coating composition [o] further comprises one or more organopolysiloxanes (C) other than the organopolysiloxane (AO), of formula [III]:
R³-(SiR³₂-O)*ᵤ*-SiR³₃ [III]
wherein *u* is an integer of 1-10,000, and R³ each independently is C₂₋₃₀-alkenyl, C₆₋₃₀-aryl, C₇₋₁₀-aralkyl, or optionally halogenated C₁₋₃₀-alkyl, and may contain -O-, -S- or -NR- between carbon atoms wherein R is H or C₁₋₅-alkyl.

8. The method of Claim 7, wherein R³s in formula [III] are alkyl and/or aryl.

9. The method of any of claims 1-8, which is applied to a substrate used in water.

10. A fouling control substrate obtained by performing the method of any of claims 1-9 on at least part of a surface of a substrate.

11. The fouling control substrate of Claim 10, which is any of a marine vessel, an underwater structure and a fishing gear.

12. The fouling control substrate of Claim 10 or 11, which is used in water.

## Patentansprüche

1. Verfahren zum Verstärken einer Verschmutzungskontrollbeschichtung, umfassend die Schritte:
(i) Bilden einer Verstärkungsbeschichtung (O) durch Auftragen und Härten einer Verstärkungsbeschichtungszusammensetzung [o], umfassend
- ein Organopolysiloxan (AO) mit zwei oder mehr Silanolgruppen oder hydrolysierbaren Gruppen im Molekül und
- eine Pyrithionsalzverbindung (BO) der Formel [I] 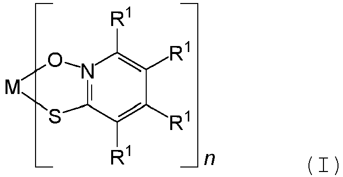 worin
R¹ jeweils unabhängig H, gegebenenfalls halogeniertes C₁₋₆-Alkyl, C₃₋₆-Cycloalkyl, C₂₋₆-Alkenyl, C₆-Aryl oder C₁₋₆-Alkoxy ist,
M ein Metall ist, ausgewählt aus Cu, Zn, Na, Mg, Ca, Ba, Fe und Sr und
*n* die Valenz des Metalls M ist; und
(ii) Bereitstellten, auf der Verstärkungsbeschichtung (O), einer Verschmutzungskontrollbeschichtung (X), gebildet durch Auftragen und Härten einer Verschmutzungskontrollbeschichtungszusammensetzung [x], umfassend
- ein Organopolysiloxan (AX) mit zwei oder mehr Silanolgruppen oder hydrolysierbaren Gruppen im Molekül, und
- ein Antiverschmutzungsmittel (BX);
worin die Menge der Pyrithionsalzverbindung (BO) in der Verstärkungsbeschichtung (O) nicht mehr als 10 Gew.-% beträgt, worin die Verstärkungsbeschichtung (O) der Verschmutzungskontrollbeschichtung (X) eine Verstärkung verleiht, und
worin die Menge (Gew.-%) der Pyrithionsalzverbindung (BO) in der Verstärkungsbeschichtung (O) kleiner ist als die des Antiverschmutzungsmittels (BX) in der Verschmutzungskontrollbeschichtung (X).

2. Verfahren gemäß Anspruch 1, worin die Menge der Pyrithionsalzverbindung (BO) in der Verstärkungsbeschichtung (O) ≤ 5,5 Gew.-% ist.

3. Verfahren gemäß Anspruch 1 oder 2, worin M in Formel [I] Cu und/oder Zn ist.

4. Verfahren gemäß irgendeinem der Ansprüche 1 bis 3, worin das Antiverschmutzungsmittel (BX) eine Pyrithionsalzverbindung der Formel [I] ist, worin M Cu ist.

5. Verfahren gemäß irgendeinem der Ansprüche 1 bis 4, worin die Pyrithionsalzverbindung (BO) eine Verbindung der Formel [I] ist, worin M Zn ist.

6. Verfahren gemäß irgendeinem der Ansprüche 1 bis 5, worin das Organopolysiloxan (AO) und/oder das Organopoylsiloxan (AX) durch Formel [II] dargestellt wird:
(W)*ᵣ*R²₍₃₋ᵣ₎Si-O-(SiR²₂-O)*ₛ*-SiR²₍₃₋ᵣ₎(W)*ᵣ* [II]
worin
W jeweils unabhängig OH oder eine hydrolysierbare Gruppe ist,
R² jeweils unabhängig H, C₂₋₁₀-Alkenyl, C₆₋₁₀-Aryl, C₇₋₁₀-Aralkyl, C₁₋₁₀-Alkoxy oder gegebenenfalls halogeniertes C₁₋₁₀-Alkyl ist,
*r* eine ganze Zahl von 1 bis 3 ist und
*s* eine ganze Zahl von 10 bis 10.000 ist.

7. Verfahren gemäß irgendeinem der Ansprüche 1 bis 6, worin die Verstärkungsbeschichtungszusammensetzung [o] ferner außer dem Organopolysiloxan (AO) ein oder mehr Organopolysiloxane (C) der Formel [III] umfasst:
R³-(SiR³₂-O)*ᵤ*-SiR³₃ [III]
worin u eine ganze Zahl von 1 bis 10.000 ist und R³ jeweils unabhängig C₂₋₃₀-Alkenyl, C₆₋₃₀-Aryl, C₇₋₁₀-Aralkyl oder gegebenenfalls halogeniertes C₁₋₃₀-Alkyl ist und -O-, -S- oder -NR-, worin R H oder C₁₋₅-Alkyl ist, zwischen Kohlenstoffatomen umfassen kann.

8. Verfahren gemäß Anspruch 7, worin die R³ in Formel [III] Alkyl und/der Aryl sind.

9. Verfahren gemäß irgendeinem der Ansprüche 1 bis 8, welches auf ein Substrat angewandt wird, das in Wasser verwendet wird.

10. Verschmutzungskontrollsubstrat, erhalten durch Durchführen des Verfahrens gemäß irgendeinem der Ansprüche 1 bis 9 auf zumindest einem Teil einer Oberfläche eines Substrats.

11. Verschmutzungskontrollsubstrat gemäß Anspruch 10, welches irgendeines von einem Schiff, einer Unterwasserstruktur und einer Fischereiausrüstung ist.

12. Verschmutzungskontrollsubstrat gemäß Anspruch 10 oder 11, welches in Wasser verwendet wird.

## Revendications

1. Procédé de renforcement d'un revêtement de contrôle de salissure, comprenant les étapes de :
(i) la formation d'un revêtement de renforcement (O) en appliquant et en durcissant une composition de revêtement de renforcement [o] comprenant
- un organopolysiloxane (AO) ayant deux ou plus de deux groupes silanols ou groupes hydrolysables dans la molécule, et
- un composé sel de pyrithione (BO) de formule [I] : 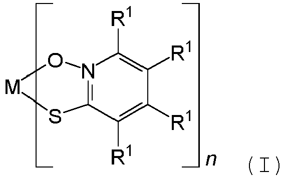 dans laquelle
R¹ est chacun indépendamment H, C₁₋₆-alkoxy, C₆-aryle, C₂₋₆-alcényle, C₃₋₆-cycloalkyle, ou C₁₋₆-alkyle optionnellement halogéné,
M est un métal choisi parmi Cu, Zn, Na, Mg, Ca, Ba, Fe et Sr, et
*n* est la valence du métal M ; et
(ii) la fourniture, sur le revêtement de renforcement (O), d'un revêtement de contrôle de salissure (X) formé en appliquant et en durcissant une composition de revêtement de contrôle de salissure [x] comprenant
- un organopolysiloxane (AX) ayant deux ou plus de deux groupes silanols ou groupes hydrolysables dans la molécule, et
- un agent antisalissure (BX) ;
dans lequel la teneur du composé sel de pyrithione (BO) dans le revêtement de renforcement (O) est no supérieure à 10 % en poids, dans lequel l revêtement de renforcement (O) renforce le revêtement de contrôle de salissure (X) et
dans lequel la teneur (% en poids) du composé sel de pyrithione (BO) dans le revêtement de renforcement (O) est inférieure à celle de l'agent antisalissure (BX) dans le revêtement de contrôle de salissure (X).

2. Le procédé de la revendication 1, dans lequel la teneur du composé sel de pyrithione (BO) dans le revêtement de renforcement (O) est ≤ 5,5 % en poids.

3. Le procédé de la revendication 1 ou 2, dans lequel M dans la formule [I] est Cu et/ou Zn.

4. Le procédé de l'une quelconque des revendications 1-3, dans lequel l'agent antisalissure (BX) est un composé sel de pyrithione de formule [I] dans lequel M est Cu.

5. Le procédé de l'une quelconque des revendications 1-4, dans lequel le composé sel de pyrithione (BO) est un composé de formule [I] dans lequel M est Zn.

6. Le procédé de l'une quelconque des revendications 1-5, dans lequel l'organopolysiloxane (AO) et/ou l'organopolysiloxane (AX) est représenté par la formule [II] :
(W)*ᵣ*R²_{(3-*r*)}Si-O-(SiR²₂-O)*ₛ*-SiR²_{(3-*r*)}(W)*ᵣ* [II]
dans laquelle
W est chacun indépendamment OH ou un groupe hydrolysable,
R² est chacun indépendamment H, C₂₋₁₀-alcényle, C₆₋₁₀-aryle, C₇₋₁₀-aralkyle, C₁₋₁₀-alkoxy, ou Ci-io-alkyle optionnellement halogéné,
*r* est un entier de 1-3, et
*s* est un entier de 10-10000.

7. Le procédé de l'une quelconque des revendications 1-6, dans lequel la composition de revêtement de renforcement [o] comprend en outre un ou plusieurs organopolysiloxane(s) (C) autre(s) que l'organopolysiloxane (AO), de formule [III] :
R³-(SiR³₂-O)*ᵤ*-SiR³₃ [III]
dans lequel *u* est un entier de 1-10000, et R³ est chacun indépendamment est C₂₋₃₀-alcényle, C₆₋₃₀-aryle, C₇₋₁₀-aralkyle, ou C₁₋₃₀-alkyle optionnellement halogéné, et peux contenir -O-, -S- ou -NR- entre des atomes de carbone dans lequel R est H ou C₁₋₅-alkyle.

8. Le procédé de la revendication 7, dans lequel R³s dans la formule [III] sont alkyle et/ou aryle.

9. Le procédé de l'une quelconque des revendications 1-8, qui est appliqué à un substrat utilisé dans l'eau.

10. Substrat de contrôle de salissure obtenu en réalisant le procédé de l'une quelconque des revendications 1-9 sur au moins une partie d'une surface d'un substrat.

11. Le substrat de contrôle de salissure de la revendication 10, qui est l'un quelconque d'un vaisseau de marine, une structure sous-marine et un article de pêche.

12. Le substrat de contrôle de salissure de la revendication 10 ou 11, qui est utilisé dans l'eau.
